# EUROPÄISCHE PATENTSCHRIFT

(11) **EP 0 712 713 B1**
(45) Veröffentlichungstag und Bekanntmachung des Hinweises auf die Patenterteilung: **27.12.2000**
(21) Anmeldenummer: 95116403.7
(22) Anmeldetag: 18.10.1995
(51) Int. Cl.: B29C 51/26, B29B 13/02, B29C 51/42, B29C 51/46, B29C 31/00, B65H 20/04

(54) **Verfahren zum Regeln der Transportgeschwindigkeit einer Vorheizung zum Erwärmen einer Folienbahn aus thermoplastischer Kunststoffolie und Vorheizung zur Durchführung des Verfahrens**
Method for controlling the transportation speed in a preheating oven for heating thermoplastic film in a preheating oven and oven for carrying out the method
Procédé pour contrôler la vitesse de transport dans un four pour le préchauffage d'une bande de film en matière thermoplastique et four de préchauffage pour réaliser ce procédé

(30) Priorität: 15.11.1994 DE 4440723
(43) Veröffentlichungstag der Anmeldung: 22.05.1996
(73) Patentinhaber: Adolf Illig Maschinenbau GmbH & Co, D-74081 Heilbronn (DE)
(72) Erfinder: Wagner, Hans Dieter, Dr., D-74626 Bretzfeld-Waldbach (DE)

(56) Entgegenhaltungen:
- DE-A- 4 111 315
- DE-C- 3 311 988
- GB-A- 922 922
- US-A- 2 725 508
- US-A- 4 416 200

## Beschreibung

Die Erfindung betrifft ein Verfahren zum Regeln der Transportgeschwindigkeit einer Vorheizung nach der Gattung des Hauptanspruches sowie eine Vorheizung zur Durchführung des Verfahrens.

Aus der DE-PS 33 11 988 ist eine gattungsgemäße Vorheizung bekannt. Die Transportgeschwindigkeit des Antriebsmotors wird bei dieser bekannten Vorheizung von Hand eingestellt, und zwar in der Weise, daß bei dieser etwas mehr Folie transportiert wird als die nachgeschaltete Thermoformmaschine benötigt. Wird die Zwischenschlaufe zu groß, wird auf eine langsamere Transportgeschwindigkeit umgeschaltet - die Differenzgeschwindigkeit zwischen beiden Transportgeschwindigkeiten ist ebenfalls von Hand einstellbar oder kann fest in der Steuerung hinterlegt sein.

Umständlich für die Bedienungsperson ist das Ermitteln dieser Transportgeschwindigkeit und gegebenenfalls der Differenzgeschwindigkeit. Wählt man die Transportgeschwindigkeit zu gering, wird die Zwischenschlaufe aufgebraucht und es gibt eine Störung. In der Praxis wählt man deshalb eher eine zu große Abzugsgeschwindigkeit. Dabei geht die Vorheizung dann immer in Stopp-Betrieb, weil die Zwischenschlaufe zu lang wird. Dies führt zu einer ungleichmäßigen Erwärmung der Folienbahn, da sie unterschiedlich lange auf den Heizwalzen aufliegt. Die Abtastung der Zwischenschlaufe erfolgt bei dieser bekannten Vorheizung über mehrere Lichtschranken, die eine Umschaltung auf die unterschiedlichen Transportgeschwindigkeiten bewirken.

Aus der DE-PS 41 11 315 ist ebenfalls eine Vorheizung bekannt, bei der über zwei Abzugswalzen die Folienbahn durch eine Wärmekammer transportiert wird und die eine Zwischenschlaufe zur nachgeschalteten Thermoformmaschine bildet. Hinweise zur Einstellung der Transportgeschwindigkeit sind dieser Patentschrift in der Weise zu entnehmen, daß der Antrieb für den Folientransport in der Vorheizung taktweise geschaltet wird in Abhängigkeit des Taktes der Thermoformmaschine. Dies bewirkt aber bei jedem Takt ein erneutes Anfahren der Vorheizung mit den Nachteilen der Beschleunigung der vorgeschalteten Folienrolle. Bei Einsatz von beheizten Walzen entsteht bei dieser Fahrweise eine ungleichmäßige Erwärmung der Folienbahn, weil die Folie unterschiedlich lange auf den Kontaktflächen der Heizwalzen aufliegt.

In der Praxis wird man beim Anfahren einer Thermoformmaschine die Taktzahl der Thermoformmaschine optimal an das Produkt und den zu verformenden Kunststoff anpassen. Die sich dabei ergebenden Taktzeitveränderungen führen ebenfalls zu Problemen mit der Transportgeschwindigkeit der vorgeschalteten Vorheizung. Da diese autark arbeitet, werden die Auswirkungen einer Taktzahlveränderung der Thermoformmaschine auf die Vorheizung nicht ausgeglichen. Auch ein eventueller Schlupf des Transportantriebes wird bei dieser Art der Vorgabe einer Transportgeschwindigkeit nicht erkannt und führt gegebenenfalls dazu, daß die Folienschlaufe aufgebraucht wird und die Maschine auf Störung geht.

Der Erfindung liegt die Aufgabe zugrunde, das Verfahren zum Regeln der Transportgeschwindigkeit der Folienbahn so auszubilden, daß eine automatische Anpassung an den Folienbedarf der Thermoformmaschine erfolgt. Eine aufwendige Ermittlung der erforderlichen Transportgeschwindigkeit sollte entfallen, Folienschlupf und eine Änderung der Taktzeit der Thermoformmaschine sollten erkannt und kompensiert werden. Dabei sollte die Vorheizung weiterhin autark betrieben werden können, ohne daß die Steuerung mit der Steuerung der Thermoformmaschine verbunden werden muß, um von dort Steuersignale oder Maschinenparamenter zu erhalten. Dies sollte auf einfache Weise ohne großen Aufwand möglich sein. Dadurch wird eine möglich gleichmäßige Temperatur der Folienbahn erreicht.

Gelöst ist diese Aufgabe durch die im Kennzeichen des Hauptanspruches angegebenen Maßnahmen. Die Unteransprüche stellen vorteilhafte Weiterbildungen dar. Sie betreffen ferner die Vorheizung zur Durchführung des Verfahrens.

Die Erfindung wird anhand der schematischen Zeichnungen näher beschrieben. Es zeigt:

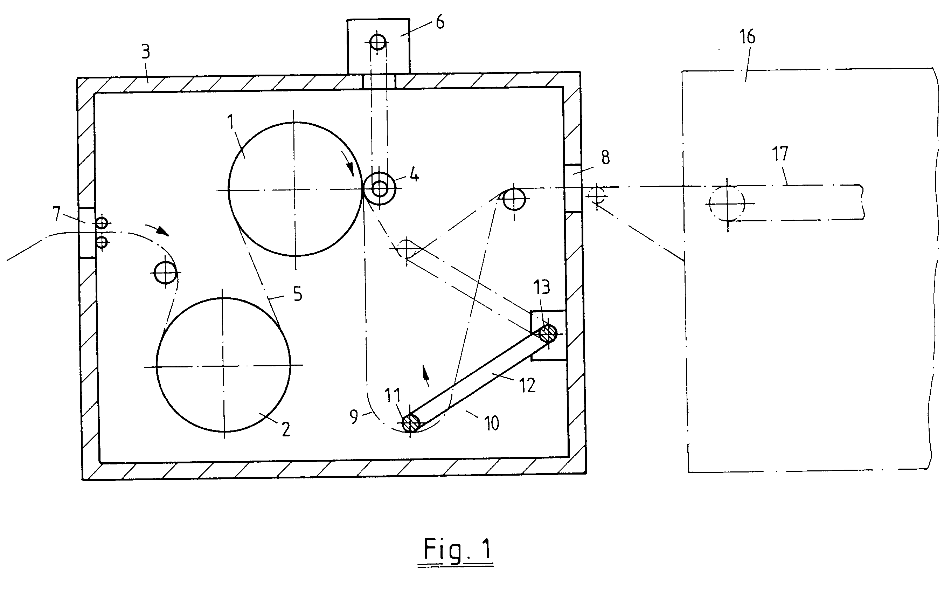

- Figur 1 -: einen Längsschnitt durch die Vorheizung

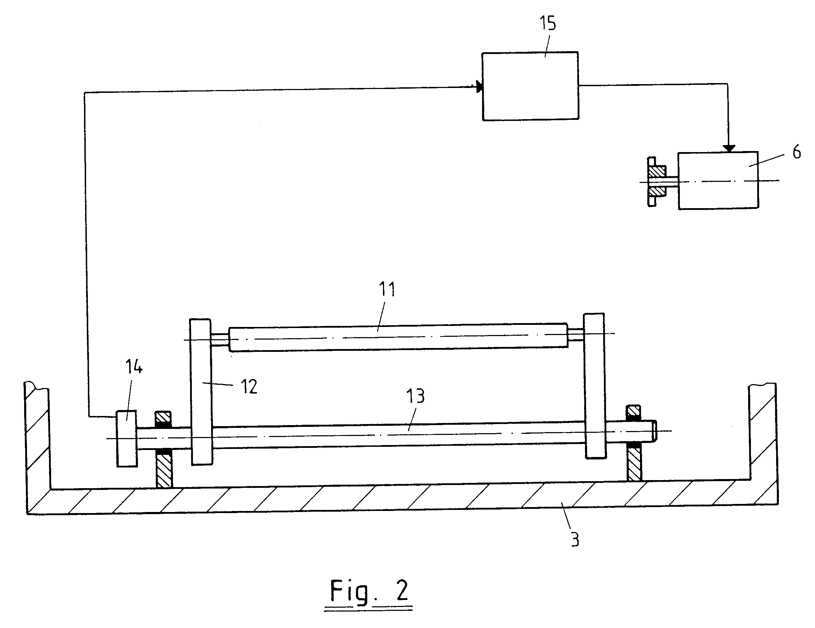

- Figur 2 -: einen Querschnitt durch die Lagerung der Schwinge zur Abtastung der Folienschlaufe.
- Figur 3 -: ein Diagramm Lage/Zeit der Schlaufe bzw. Schwinge

Die Vorheizung zur Durchführung des Verfahrens besteht aus zwei Heizwalzen 1, 2, die in einem Gehäuse 3 drehbar gelagert sind. Ihre Beheizung erfolgt vorzugsweise über nicht dargestellte elektrische Heizkörper, angeordnet im Mantel der Heizwalzen 1, 2. Zudem wird die Luft im Gehäuse 3 von nicht dargestellte Einrichtungen beheizt. Gegen die Heizwalze 1 wird eine Transportwalze 4 angepreßt, zwischen beiden befindet sich die Folienbahn 5. Über einen in der Drehzahl veränderbaren Antrieb 6 erfolgt die Drehbewegung der Transportwalze 4. Für die Zuführung der Folienbahn 5 ist im Gehäuse 3 ein Schlitz 7 vorgesehen, für den Austransport der Folienbahn 5 ein Schlitz 8. Die Folienbahn 5 bildet vor dem Austransport aus dem Gehäuse 3 eine Schlaufe 9, die über eine Schwinge 10 geführt wird. Diese Schwinge 10 besteht aus einer drehbaren Walze 11, die über zwei Hebel 12 mit einer Welle 13 verbunden ist. Die drehbar gelagerte Welle 13 steht mit einem Meßwertgeber 14 in Verbindung. Dieser ist an die Steuerung 15 der Vorheizung angeschlossen, die auch die Drehzahl des Antriebes 6, z. B. über einen Frequenzumformer, steuert.

Ausgehend von einer betriebsbereiten Vorheizung und einer betriebsbereiten nachgeschalteten, intermittierend betriebenen Thermoformmaschine 16 muß beim Start der Maschinen zunächst eine Start-Transportgeschwindigkeit für die Vorheizung vorgegeben oder ermittelt werden. Hierzu gibt es mehrere Möglichkeiten.

Entweder man gibt der Steuerung 15 durch Handeingabe einen ungefähren Wert für die Transportgeschwindigkeit vor, den man aus ungefährer Taktzahl und dem ungefähren Vorschub ermittelt.

Oder die Steuerung wählt sich einen mittleren Wert für die Transportgeschwindigkeit.

Die vorteilhafteste dritte Lösung ist die, daß sich die Steuerung 15 während den ersten beiden Takten der Thermoformmaschine 16 aus Taktzeit und Hub der Zwischenschlaufe 9 eine erforderliche Transportgeschwindigkeit errechnet.

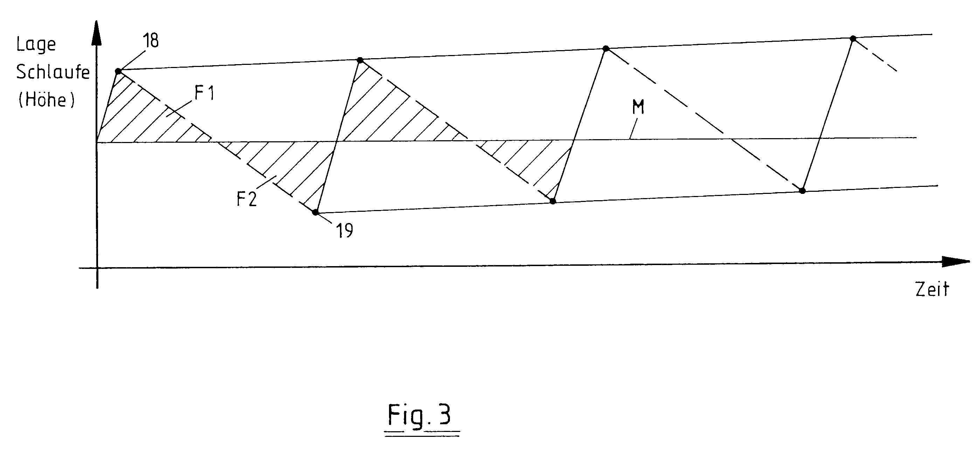

Das erfindungsgemäße Verfahren setzt ein beim Betrieb der Vorrichtung, indem die Lage der Schwinge 10 ständig von der Steuerung 15 über den Meßwertgeber 14 erfaßt und eine Trendanalyse durchgeführt wird. Die Lage der Schlaufe 9 bzw. der Schwinge 10 ist in Figur 3 als Diagramm dargestellt, und zwar in dem Fall, daß die Transportgeschwindigkeit zu langsam ist, die Schlaufe also nach oben wandert. Wenn die Transporteinrichtung 17 der Thermoformmaschine 16 Folie abzieht erfolgt dies sehr rasch, die Schlaufe 9 und damit die Schwinge 10 geht nach oben. Während des Stillstandes der Transporteinrichtung 17 bewegt sich die Schlaufe 9 wieder nach unten. Die Steuerung 15 erfaßt entweder die Spitzenwerte 18 (oberste Lage) bzw. 19 (unterste Lage) der Schwinge 10 und erkennt daraus den Trend, wohin die Schlaufe 9 wandert. Oder die Steuerung errechnet dies aufgrund integrierter Werte (Flächen F1, F2) um eine Mittellage oder Bezugslage M. Auf jeden Fall kann aufgrund des Trends der Schlaufe eine Beeinflussung des Antriebes 6 im Sinne einer Regelung der Drehzahl - z.B. über einen Frequenzumrichter - vorgenommen werden. Innerhalb kurzer Betriebszeit findet die Steuerung 15 die optimale Transportgeschwindigkeit, die nur sehr gering um einen Mittelwert schwankt. Bei Änderung der Taktzahl der Thermoformmaschine 16 oder bei Folienschlupf erfolgt automatisch eine Anpassung.

Es gibt mehrere Wege, die Meßwerte des Meßwertgebers 14 von der Steuerung 15 zu verarbeiten. Am sichersten ist die Verarbeitung der unteren Spitzenwerte 19, wenn die Schlaufe 9 über eine Schwinge 10 oder eine vertikalbewegliche Tänzerwalze abgefragt wird. Die Abfrage der oberen Spitzenwerte 18 am Ende des Transporthubes der Transporteinrichtung 17 bringt eher eine Fehlergefahr, da die Schwinge 10 durch die Bewegungsenergie überschwingt.

Man kann mehrere Meßwerte zu einem Mittelwert zusammenfassen und mit einem zuvor gebildeten Mittelwert vergleichen. Das eliminieren von stark abweichenden Meßwerten kann erfolgen, die wohl von Meßfehlern herrühren. Solche Verfahren bringen dann Vorteile, wenn die Schlaufe 9 nicht wie dargestellt indirekt über eine Schwinge 10 abgefragt wird, sondern direkt. Für eine direkte Abfrage der Schlaufe 9 eignen sich optische oder mit Ultraschall arbeitende Meßeinrichtungen. Da eine solche direkte Messung Ungenauigkeiten mit sich bringt, erfolgt durch diese Mittelwertbildung eine genauere Aussage über den Trend der Schlaufe 9. Gleiches trifft zu, wenn man Meßwerte integriert, also z.B. mehrere Flächeninhalte F1 oder F2 addiert und mit anderen Summenwerten vergleicht. Auch hier ist es möglich, gewisse extreme Werte zu unterdrücken, die auf Meßfehler zurückgeführt werden müssen.

Eine Abtastung der Schlaufe 9 zu bestimmten Zeitpunkten ist dann möglich, wenn diese Zeitpunkte mit der Thermoformmaschine 16 abgestimmt sind, z.B. bei jedem Start der Transporteinrichtung 17. Dies erfordert allerdings eine Verkettungen der Steuerungen beider Einrichtungen.

## Patentansprüche

1. Verfahren zum Regeln der Transportgeschwindigkeit einer Folienbahn (5) aus thermoplastischem Kunststoff in einer Vorheizung zum Erwärmen dieser Folienbahn (5), die einer intermittierend betriebenen Thermoformmaschine (16) vorgeschaltet ist, bei dem die Folienbahn (5) kontinuierlich transportiert und eine Schlaufe (9) vor der Thermoformmaschine (16) gebildet wird, deren Lage von einer Meßeinrichtung erfaßt und in Abhängigkeit der Lage der Schlaufe (9) die Transportgeschwindigkeit beeinflußt wird, dadurch gekennzeichnet, daß die Größe der Schlaufe (9) ständig oder zu bestimmten festgelegten Zeitpunkten erfaßt, die Tendenz der Lageveränderung der Schlaufe (9) von der Steuerung (15) ermittelt und aufgrund dieser Lageveränderung der Sohlaufe (9) die Transportgeschwindigkeit der Folienbahn (5) in der Vorheizung im Sinne einer Regelung so beeinflußt wird, daß sich die Schlaufe (9) immer im gleichen Bereich bewegt.

2. Verfahren nach Anspruch 1 dadurch gekennzeichnet, daß die Spitzenwerte (19) der max. Größe der Schlaufe (9), die während der einzelnen Arbeitstakte der Thermoformmaschine (16) erreicht werden, zur Regelung der Abzugsgeschwindigkeit herangezogen werden.

3. Verfahren nach Anspruch 1 dadurch gekennzeichnet, daß die Spitzenwerte (18) der minimalen Größe der Schlaufe (9), die während der einzelnen Arbeitstakte der Thermoformmaschine (16) erreicht werden, zur Regelung der Abzugsgeschwindigkeit herangezogen werden.

4. Verfahren nach einem der Ansprüche 1 bis 3 dadurch gekennzeichnet, daß mehrere Spitzenwerte (18, 19) addiert werden und dieser Wert mit zuvor auf gleiche Weise gebildeten Summenwerten verglichen wird, um die Tendenz der Lageveränderung der Schlaufe (9) zu ermitteln.

5. Verfahren nach einem der Ansprüche 2 bis 4 dadurch gekennzeichnet, daß Meßwerte unberücksichtigt bleiben, die von zuvor oder danach ermittelten Meßwerten extrem abweichen.

6. Verfahren nach Anspruch 1 dadurch gekennzeichnet, daß eine Bezugsebene (M) festgelegt wird und die von dieser Bezugsebene abweichenden Meßwerte der Schlaufenlage über die Zeit integriert werden (F1, F2) und die Veränderung des Wertes dieses Integrals zur Ermittlung der Transportgeschwindigkeit herangezogen wird.

7. Verfahren nach Anspruch 1 dadurch gekennzeichnet, daß die Erfassung der Lage der Schlaufe (9) zu festgelegten Zeitpunkten in Bezug zu Steuerungsabläufen der Thermoformmaschine (16) erfolgt.

8. Verfahren nach einem der Ansprüche 1 bis 7 dadurch gekennzeichnet, daß die Erfassung der Schlaufe (9) indirekt erfolgt.

9. Verfahren nach Anspruch 8 dadurch gekennzeichnet, daß die indirekte Erfassung der Schlaufe (9) dadurch erfolgt, daß die Lage einer Schwinge (10), die mit einem Meßwertgeber (14) verbunden ist, erfaßt wird.

10. Verfahren nach Anspruch 8 dadurch gekennzeichnet, daß die indirekte Erfassung der Schlaufe (9) über eine Tänzerwalze erfolgt, die mit einem induktiven Wegmeßsystem in Verbindung steht.

11. Verfahren nach einem der Ansprüche 1 bis 7 dadurch gekennzeichnet, daß die Schlaufe (9) direkt über ein optisches oder mit Ultraschall arbeitendes Meßsystem erfaßt wird.

12. Vorheizung zum Vorschalten an eine Thermoformmaschine (16), bestehend aus einer Heizeinrichtung (1, 2) zum Erwärmen einer Folienbahn (5) aus thermoplastischem Kunststoff und einer Transporteinrichtung für die Folienbahn (5), mit Einrichtungen zum Erfassen der Schlaufe (9) der Folienbahn (15) zwischen Transporteinrichtung (4) und Thermoformmaschine (16), gekennzeichnet durch eine Meßeinrichtung (14), die jede Position der Schlaufe (9) erfassen kann und die mit einer Steuerung (15) verbunden ist, die aufgrund der Veränderung der Schlaufe (9) die Transportgeschwindigkeit des Antriebs (6) regeln kann.

13. Vorheizung nach Anspruch 12 dadurch gekennzeichnet, daß zur indirekten Erfassung der Schlaufe (9) eine Schwinge (10) vorgesehen ist, die mit einer Meßeinrichtung (14) verbunden ist.

14. Vorheizung nach Anspruch 13 dadurch gekennzeichnet, daß als Meßeinrichtung (14) ein Potentiometer oder ein absolutes oder ein inkrementales Wegmeßsystem eingesetzt ist.

15. Vorheizung nach Anspruch 12 dadurch gekennzeichnet, daß zur indirekten Erfassung der Schlaufe (9) eine Tänzerwalze vorgesehen ist, die mit einem induktiven Wegmeßsystem in Verbindung steht.

16. Vorheizung nach Anspruch 12 dadurch gekennzeichnet, daß zur direkten Erfassung der Schlaufe (9) ein optisches oder mit Ultraschalll arbeitendes Meßsystem eingesetzt ist.

## Claims

1. Method of regulating the transport speed of foil web (5) of thermoplastic material in a preheating device for heating this foil web (5), which is connected upstream of an intermittently driven thermal moulding machine (16), in which the foil web (5) is continuously transported and a loop is formed ahead of the thermal moulding machine (16), the position of which is detected by a measuring device and the transport speed is influenced in dependence on the position of the loop (9), characterised in that the size of the loop (9) is detected constantly or at specific fixed instants, the tendency of the positional change of the loop (9) is ascertained by the control (15) and the transport speed of the foil web (5) in the preheating device is so influenced on the basis of this positional change of the loop (9) in the sense of a regulation that the loop (9) always moves in the same range.

2. Method according to claim 1, characterised in that the peak values (19) of the maximum size of the loop (9), which are reached during the individual operating cycles of the thermal moulding machine (16), are drawn upon for regulation of the withdrawal speed.

3. Method according to claim 1, characterised in that the peak values (18) of the minimum size of the loop (9), which are reached during the individual operating cycles of the thermal moulding machine (16), are drawn upon for regulation of the withdrawal speed.

4. Method according to one of claims 1 to 3, characterised in that several peak values (18, 19) are summated and this value is compared with sum values previously formed in the same manner in order to detect the tendency of the positional change of the loop (9).

5. Method according to one of claims 2 to 4, characterised in that measurement values which deviate extremely from previously or subsequently detected measurement values are left out of consideration.

6. Method according to claim 1, characterised in that a reference plane (M) is established and the measurement values, which deviate from this reference plane, of the position of the loop are integrated over time (F1, F2) and the change in the value of this integral is drawn upon for detection of the transport speed.

7. Method according to claim 1 characterised in that the detection of the position of the loop (9) takes place at fixed instants with respect to control sequences of the thermal moulding machine.

8. Method according to one of claims 1 to 7, characterised in that the detection of the loop (9) takes place indirectly.

9. Method according to claim 8, characterised in that the indirect detection of the loop (9) takes place in such a manner that the position of a rocker (10), which is connected with a measurement value transmitter (14), is detected.

10. Method according to claim 8, characterised in that the indirect detection of the loop (9) takes place by way of a compensating roller which stands in connection with an inductive travel measuring system.

11. Method according to one of claims 1 to 7, characterised in that the loop (9) is detected directly by way of a measuring system operating optically or with ultrasound.

12. Protecting device for connection upstream of a thermal moulding machine (16), consisting of a heating device (1, 2) for heating a foil web (5) of thermoplastic synthetic material and a transport device for the foil web (5), with devices for detection of the loop (9) of the foil web (15) between transport device (4) and thermal moulding machine (16), characterised by a measuring device (14) which can detect every position of the loop (6) and which is connected with a control (15), which can regulate the transport speed of the drive (6) in dependence on the change in the loop (9).

13. Preheating device according to claim 12, characterised in that a rocker (10), which is connected with a measuring device (14), is provided for indirect detection of the loop (9).

14. Preheating device according to claim 13, characterised in that a potentiometer or an absolute or an incremental travel measuring system is used as measuring device (14).

15. Preheating device according to claim 12, characterised in that a compensating roller, which stands in connection with an inductive travel measuring system, is used for indirect detection of the loop (9).

16. Preheating device according to claim 12, characterised in that a measuring system operating optically or with ultrasound is used for indirect detection of the loop (9).

## Revendications

1. Procédé de régulation de la vitesse de transport d'une bande de film (5) en matière thermoplastique dans un four de préchauffage pour chauffer cette bande (5), en amont d'une machine de thermoformage (16) à fonctionnement intermittent,
selon lequel la bande de film (5) est transportée en continu et forme une boucle (9) en amont de la machine de thermoformage (16), boucle dont la position est détectée par une installation de mesure et, en fonction de la position de la boucle (9), on influence la vitesse de transport, caractérisé en ce qu'
• on saisit, la taille de la boucle (9),en permanence ou à des instants déterminés,
• on détermine la tendance de variation de position de la boucle (9) à l'aide de la commande (15), et
• à partir de cette variation de position de la boucle (9), on influence la vitesse de transport de la bande de film (5) dans le four de préchauffage, dans le sens d'une régulation, pour que la boucle (9) se déplace toujours dans la même plage.

2. Procédé selon la revendication 1,
caractérisé en ce que
les valeurs extrémales (19) de la taille maximale de la boucle (9), atteintes pendant les différentes phases de fonctionnement de la machine de thermoformage (16), sont utilisées pour réguler la vitesse de dévidage.

3. Procédé selon la revendication 1,
caractérisé en ce qu'
on utilise les valeurs extrémales (18) de la taille minimale de la boucle (9), obtenues pendant les différentes phases de travail de la machine de thermoformage (16), pour réguler la vitesse de dévidage.

4. procédé selon l'une quelconque des revendications 1 à 3,
caractérisé en ce qu' extrémales (18, 19) et on compare la valeur obtenue à des sommes formées de la même manière, antérieurement, pour déterminer la tendance de la variation de position de la boucle (9).

5. Procédé selon l'une quelconque des revendications 2 à 4,
caractérisé en ce qu'
on ne tient pas compte des valeurs de mesure qui diffèrent de façon extrême par rapport aux valeurs de mesure déterminées préalablement ou postérieurement.

6. Procédé selon la revendication 1,
caractérisé en ce qu'
on fixe un plan de référence (M) et on intègre, en fonction du temps, les valeurs de mesure de la position de la boucle qui diffèrent de ce plan de référence (F1, F2), et on utilise la variation de la valeur de cette intégrale pour déterminer la vitesse de transport.

7. Procédé selon la revendication 1,
caractérisé en ce qu'
on saisit la position de la boucle (9) à des instants déterminés par rapport au déroulement des commandes de la machine de thermoformage (16) .

8. Procédé selon l'une quelconque des revendications 1 à 7,
caractérisé en ce que
la saisie de la boucle (9) est faite indirectement.

9. Procédé selon la revendication 8,
caractérisé en ce que
la saisie indirecte de la boucle (9) se fait par la saisie de la position d'une bielle oscillante (10) reliée à un capteur de mesures (14).

10. Procédé selon la revendication 8,
caractérisé en ce qu'
on saisit la boucle (9) à l'aide d'un rouleau valseur coopérant avec un système inductif de mesure de course.

11. Procédé selon l'une quelconque des revendications 1 à 7,
caractérisé en ce qu'
on saisit la boucle (9) directement avec un système de mesure à fonctionnement optique ou aux ultrasons.

12. Four de préchauffage monté en amont d'une machine de thermoformage (16) composé d'une installation de chauffage (1, 2) pour chauffer une bande de film (5) de matière thermoplastique et d'une installation de transport pour la bande de film (5), avec des installations pour saisir la boucle (9) de la bande de film (5), entre l'installation de transport (4) et la machine de thermoformage (16),
caractérisé par
une installation de mesure (14) qui peut saisir chaque position de la boucle (9) et coopère avec une installation de commande (15) régulant la vitesse de transport du moyen d'entraînement (6) en fonction de la variation de la boucle (9) .

13. Four de préchauffage selon la revendication 12,
caractérisé par
une bielle oscillante (10) pour saisir indirectement la boucle (9), cette bielle étant reliée à une installation de mesure (14) .

14. Four de préchauffage selon la revendication 13,
caractérisé en ce que
l'installation de mesure (14) est un potentiomètre ou un système de mesure de course à fonctionnement absolu ou incrémental.

15. Four de préchauffage selon la revendication 12,
caractérisé par
un rouleau valseur pour saisir indirectement la boucle (9) ce rouleau coopérant avec un système inductif de mesure de course.

16. Four de préchauffage selon la revendication 12,
caractérisé par
un système de mesure optique ou à ultrasons pour la saisie indirecte de la boucle (9) .
